# EUROPÄISCHE PATENTSCHRIFT

(11) **EP 4 095 798 B1**
(45) Veröffentlichungstag und Bekanntmachung des Hinweises auf die Patenterteilung: **27.09.2023**
(21) Anmeldenummer: 22170523.9
(22) Anmeldetag: 28.04.2022
(51) Int. Cl.: G06T 7/00, G06T 7/521, G06V 10/145, G06V 20/64

(54) **VERFAHREN ZUR ERFASSUNG DER DREIDIMENSIONALEN STRUKTUR EINES GEGENSTANDS**
METHOD FOR DETECTING THE THREE-DIMENSIONAL STRUCTURE OF AN OBJECT
PROCÉDÉ DE DÉTECTION DE LA STRUCTURE TRIDIMENSIONNELLE D'UN OBJET

(30) Priorität: 26.05.2021 AT 504152021
(43) Veröffentlichungstag der Anmeldung: 30.11.2022
(73) Patentinhaber: AIT Austrian Institute of Technology GmbH, 1210 Wien (AT)
(72) Erfinder: Haessig, Germain, 1220 Wien (AT)
(74) Vertreter: Wildhack & Jellinek

(56) Entgegenhaltungen:
- EP-A1- 2 887 009
- WO-A1-2020/169834
- CHRISTIAN BRANDLI ET AL: "Adaptive pulsed laser line extraction for terrain reconstruction using a dynamic vision sensor", FRONTIERS IN NEUROSCIENCE, Bd. 7, 17. Januar 2014 (2014-01-17), Seiten 1-9, XP055142635, DOI: 10.3389/fnins.2013.00275

## Beschreibung

Die Erfindung betrifft ein Verfahren und eine Anordnung zum Erfassen eines dreidimensionalen Abbilds eines Gegenstands.

Aus dem Stand der Technik ist es bekannt, dass Gegenstände, beispielsweise im Zuge ihrer Herstellung, mittels optischer Verfahren kontrolliert werden. Zu diesem Zweck werden diese Gegenstände an einem Sensor vorbei bewegt, der mithilfe bildgebender Verfahren ein Abbild des Gegenstands erstellt.

Insbesondere ist es aus der internationalen Anmeldung WO 2020/169835 A1 bekannt, einen Gegenstand mit einem periodisch ein- und ausgeschaltetem Linienlaserlicht zu bestrahlen. Das Laserlicht wird von einem Sensor erfasst, der ausschließlich Intensitätsänderungen registriert, sodass Daten überhaupt nur an für Positionen erstellt werden, an denen das Laserlicht detektiert wird. Aufgrund der periodischen Intensitätsänderung des Linienlaserlichts besteht jedoch das Problem, dass der ausschließlich auf Intensitätsänderungen sensitive Sensor regelmäßig große Datenmengen zu verarbeiten hat.

In der wissenschaftlichen Arbeit "Adaptive pulsed laser line extraction for terrain reconstruction using a dynamic vision sensor" von Christian Brandli et al. (2014) und in dem europäischen Patent EP 2887009 werden zwei Verfahren zur Rekonstruktion der dreidimensionalen Oberfläche eines Objekts vorgestellt, wobei das Objekt mit strukturiertem Licht (z.B. einer Laserlinie) beleuchtet wird. Patentdokument WO 2020169834 offenbart ein Verfahren zur dreidimensionalen Bilderfassung mit ereignisbasierten Bildsensoren und strukturiertem Licht.

Die Erfindung stellt sich die Aufgabe, hier Abhilfe zu schaffen und bei der vorliegenden Konfiguration ein weniger rechenintensives Vorgehen bei gleichbleibender Qualität der erfassten dreidimensionalen Struktur zur Verfügung zu stellen.

Die Erfindung erreicht dies bei einem Verfahren der eingangs genannten Art, indem der Gegenstand durch den Aufnahmebereich eines Sensors in Form eines zweidimensionalen Flächensensors bewegt wird, wobei der Sensor eine Vielzahl von in Zeilen und Spalten angeordneten Einzelsensoren aufweist,
wobei die Einzelsensoren dazu ausgebildet sind, pixelweise Ereignissignale abzugeben, und zwar
- ein Hellerwerden indizierende Ereignissignale, wenn der Intensitätswert des beim jeweiligen Pixel einlangenden Lichts einen vorgegebenen oberen Schwellenwert überschreitet, und
- ein Dunklerwerden indizierende Ereignissignale, wenn der Intensitätswert des beim jeweiligen Pixel einlangenden Lichts einen vorgegebenen unteren Schwellenwert unterschreitet,
- wobei im Fall der Überschreitung oder Unterschreitung und nachfolgenden Abgabe eines Ereignissignals der obere und untere Schwellenwert des jeweiligen Einzelsensors angepasst wird, sodass sich der aktuelle Intensitätswert innerhalb des angepassten oberen und unteren Schwellenwerts befindet,
- wobei zumindest ein Teil des Gegenstands, der sich im Aufnahmebereich des Sensors befindet, mit einem strukturierten Muster elektromagnetischer Wellen bestrahlt wird, insbesondere einem Lichtmuster, vorzugsweise erstellt durch einen Laser, wobei das strukturierte Muster besonders bevorzugt eine Laserline ist,
- wobei in den Ereignissignalen nach Paaren umfassend zumindest ein Hellerwerden indizierendes erstes Ereignissignal und zumindest einem, insbesondere zeitlich nachfolgenden, ein Dunklerwerden indizierendes zweites Ereignissignal, gesucht wird, wobei die dem Paar zugehörigen Ereignissignale
   - innerhalb eines, durch die Transportgeschwindigkeit vorgegebenen, Zeitfensters erstellt wurden und
   - auf derselben Bildkurve liegen, auf die Oberflächenbereiche von Gegenständen, die parallel zur Transportrichtung bewegt werden, abgebildet werden, und
   - die insbesondere einen Abstand oder eine Relativposition zueinander haben, der oder die innerhalb eines vorgegebenen Toleranzbereichs liegt,
- wobei ausgehend von den Koordinatenwerten des ersten und/oder zweiten Ereignissignals der so aufgefundenen Paare eine Positionsinformation umfassend einen Tiefenwert, gegebenenfalls die dreidimensionale Position des vom Lichtmuster beleuchteten Teils der Oberfläche des Gegenstands, ermittelt wird, und
- wobei die einzelnen ermittelten Positionsinformationen entsprechend dem Aufnahmezeitpunkt, der Transportgeschwindigkeit und der Zeit des Auftretens des Paars in Transportrichtung verschoben und eine dreidimensionale Struktur, die den Gegenstand repräsentiert, basierend auf diesen Positionsinformationen erstellt wird. Die Erfindung zeigt dabei die Vorteile des geringen Datenanfalls, der mit der Verwendung eines Sensors einhergeht, der nur für Änderungen der Intensität sensitiv ist. Gleichzeitig vermeidet die Erfindung aber die Notwendigkeit eines blinkenden oder in seiner Intensität variierenden strukturierten Lichtmusters, das den Datenanfall erhöht.

Ein bevorzugtes numerisch einfaches Verfahren, das eine numerisch aufwendige allgemeine Zuordnung von Ereignissen zu Bildkurven vermeidet, sieht vor, dass die einzelnen vom Sensor bzw. den Einzelsensoren erstellten Ereignissignale hinsichtlich ihrer Bildposition und/oder Sensorkoordinaten rektifiziert werden, sodass jedem Ereignissignal zwei rektifizierte Koordinaten zugewiesen werden, wobei eine erste Koordinatenrichtung des Ereignissignals der Position des aufgenommenen Gegenstands dessen Position in Transportrichtung entspricht, und/oder dass die zweite Koordinatenrichtung des Ereignissignals im Winkel zur Transportrichtung steht, vorzugsweise normal zur Transportrichtung und/oder normal und zu einer Ebene, gegenüber der eine Tiefeninformation zu ermitteln ist, und/oder dass Ereignissignale, die auf derselben Bildkurve liegen, auf die Oberflächenbereiche von Gegenständen, die parallel zur Transportrichtung bewegt werden, abgebildet werden, dieselbe zweite Koordinatenrichtung zugewiesen wird.

Ein Verfahren, das auf die allgemeine Situation bewegter dreidimensionaler Objekte Rücksicht nimmt und gleichzeitig numerisch effizient ist, sieht vor, dass für die Rektifizierung eine lineare Koordinatentransformation herangezogen wird, bei der die Bildpositionen (x, y) und/oder Sensorkoordinaten der Ereignissignale in die Koordinatenrichtungen der rektifizierten Koordinaten umgerechnet werden, wobei zur Umrechnung vorzugsweise eine homogene Koordinatentransformation unter Verwendung einer 3x3 Matrix vorgenommen wird.

Um Fehler, die durch die Optik des Sensors bedingt sind, zu vermeiden, kann vorgesehen sein, dass, insbesondere vor oder nach dem Rektifizieren, eine Transformation vorgenommen wird, mit der eine Entzerrung der durch die Linse verursachten Verzerrung vorgenommen wird.

Um Gegenstände, deren Querschnittsform sich während des Transports in Transportrichtung nicht oder nur geringfügig ändert besser detektieren zu können, kann vorgesehen sein, dass für den Fall, dass innerhalb eines vorgegebenen Zeitbereichs innerhalb einer Bildkurve, auf die Oberflächenbereiche von Gegenständen, die parallel zur Transportrichtung bewegt werden, keine Paare einander zuordenbarer Ereignissignale detektiert werden oder nach erfolgter Rektifizierung keine Paare einander zuordenbarer Ereignissignale mit einer zweiten Koordinatenrichtung innerhalb eines vorgegebenen Bereichs detektiert werden, in vorgegebenen Zeitabständen jeweils eine Positionsinformation basierend auf den jeweils zuletzt ermittelten Paaren erstellt werden.

Eine bevorzugte Detektion des strukturierten Lichtmusters sieht vor, dass vor dem Sensor ein optischer Filter angeordnet ist, der, vorzugsweise ausschließlich, für Licht durchlässig ist, dessen Wellenlängenbereich dem Wellenlängenbereich des elektromagnetischen Wellenmusters entspricht, und/oder dass der Sensor, insbesondere ausschließlich, für elektromagnetische Wellen dieser Wellenlängenbereich sensitiv ist.

Die Erfindung betrifft weiters auch eine Anordnung zur Erfassung der dreidimensionalen Struktur eines Gegenstands, umfassend eine Transporteinrichtung zum Transport eines Gegenstands einen Sensor in Form eines Flächensensors umfassend eine Anzahl von in Zeilen und Spalten angeordneten Einzelsensoren zur Erfassung des Gegenstands im Zuge seiner Bewegung mittels der Transporteinrichtung,
wobei die Einzelsensoren dazu ausgebildet sind, pixelweise Ereignissignale abzugeben, und zwar
- ein Hellerwerden indizierende Ereignissignale, wenn der Intensitätswert des beim jeweiligen Pixel einlangenden Lichts einen vorgegebenen oberen Schwellenwert überschreitet, und
- ein Dunklerwerden indizierende Ereignissignale, wenn der Intensitätswert des beim jeweiligen Pixel einlangenden Lichts einen vorgegebenen unteren Schwellenwert unterschreitet,
- wobei im Fall der Überschreitung oder Unterschreitung und nachfolgenden Abgabe eines Ereignissignals der obere und untere Schwellenwert des jeweiligen Einzelsensors angepasst wird, sodass sich der aktuelle Intensitätswert innerhalb des angepassten oberen und unteren Schwellenwerts befindet,

- wobei die Anordnung eine Lichtquelle, insbesondere einen Laser, umfasst, der zumindest einen Teil des Gegenstands, der sich im Aufnahmebereich des Sensors befindet, mit einem strukturierten Muster elektromagnetischer Wellen bestrahlt, insbesondere einem Lichtmuster, vorzugsweise durch ein strukturiertes Muster in Form eine Laserline,
- wobei dem Sensor eine Verarbeitungseinheit nachgeschaltet ist, die dazu ausgebildet ist, in den vom Sensor erstellten Ereignissignalen nach Paaren umfassend zumindest ein Hellerwerden indizierendes erstes Ereignissignal und zumindest einem, insbesondere zeitlich nachfolgenden, ein Dunklerwerden indizierendes zweites Ereignissignal, zu suchen sucht, wobei die dem Paar zugehörigen Ereignissignale
   - innerhalb eines, durch die Transportgeschwindigkeit vorgegebenen, Zeitfensters erstellt wurden und
   - auf derselben Bildkurve liegen, auf die Oberflächenbereiche von Gegenständen, die parallel zur Transportrichtung bewegt werden, abgebildet werden, und
   - die insbesondere einen Abstand oder eine Relativposition zueinander haben, der oder die innerhalb eines vorgegebenen Toleranzbereichs liegt,
- wobei die Verarbeitungseinheit dazu ausgebildet ist,
   - ausgehend von den Koordinatenwerten des ersten und/oder zweiten Ereignissignals der so aufgefundenen Paare eine Positionsinformation umfassend einen Tiefenwert, gegebenenfalls die dreidimensionale Position des vom Lichtmuster beleuchteten Teils der Oberfläche des Gegenstands, zu ermitteln, und
- die einzelnen ermittelten Positionsinformationen entsprechend dem Aufnahmezeitpunkt, der Transportgeschwindigkeit und der Zeit des Auftretens des Paars in Transportrichtung zu verschieben und eine dreidimensionale Struktur, die den Gegenstand repräsentiert, basierend auf diesen Positionsinformationen zu erstellen. Eine solche erfindungsgemäße Anordnung zeigt die Vorteile des geringen Datenanfalls in der Datenverarbeitung, der mit der Verwendung eines Sensors einhergeht, da dieser Sensor für Änderungen der Intensität sensitiv ist, vermeidet aber gleichzeitig die Notwendigkeit eines blinkenden strukturierten Lichtmusters, das den Datenanfall erhöht.

Eine bevorzugte Anordnung, die auf einfache Weise eine numerisch aufwendige allgemeine Zuordnung von Ereignissen zu Bildkurven vermeidet, sieht vor, dass die Verarbeitungseinheit dazu ausgebildet ist, eine Transformation vorzunehmen, die die einzelnen vom Sensor bzw. den Einzelsensoren erstellten Ereignissignale hinsichtlich ihrer Bildposition rektifiziert, sodass die Transformation jedem Ereignissignal im Zuge der Transformation zwei rektifizierte Koordinaten zuweist, wobei eine erste Koordinatenrichtung des Ereignissignals der Position des aufgenommenen Gegenstands dessen Position in Transportrichtung entspricht, und/oder dass die zweite Koordinatenrichtung des Ereignissignals im Winkel zur Transportrichtung steht, vorzugsweise normal zur Transportrichtung und/oder normal und zu einer Ebene, gegenüber der eine Tiefeninformation zu ermitteln ist, und/oder dass Ereignissignale, die auf derselben Bildkurve liegen, auf die Oberflächenbereiche von Gegenständen, die parallel zur Transportrichtung bewegt werden, abgebildet werden, dieselbe zweite Koordinatenrichtung zugewiesen wird.

Eine Anordnung, die bei der Datenverarbeitung auf die allgemeine Situation bewegter dreidimensionaler Objekte Rücksicht nimmt und gleichzeitig eine numerisch effiziente Verarbeitung vornimmt, sieht vor, dass für die Rektifizierung in einer lineare Koordinatentransformation besteht, die die Bildpositionen (x, y) der Ereignissignale in die Koordinatenrichtungen der rektifizierten Koordinaten transformiert, wobei die Umrechnung vorzugsweise durch eine homogene Koordinatentransformation unter Verwendung einer 3x3 Matrix festgelegt ist.

Um Fehler, die durch die Optik des Sensors bedingt sind, zu vermeiden, kann vorgesehen sein, dass die Verarbeitungseinheit dazu ausgebildet ist, insbesondere vor oder nach dem Rektifizieren, eine Transformation vorzunehmen, die die durch die Linse des Sensors verursachte Verzerrung kompensiert.

Um mit einer solchen Anordnung Gegenstände, deren Querschnittsform sich während des Transports in Transportrichtung nicht oder nur geringfügig ändert besser detektieren zu können, kann bevorzugt vorgesehen sein, dass dass die Verarbeitungseinheit dazu ausgebildet ist, für den Fall, dass innerhalb eines vorgegebenen Zeitbereichs innerhalb einer Bildkurve, auf die Oberflächenbereiche von Gegenständen, die parallel zur Transportrichtung bewegt werden, keine Paare einander zuordenbarer Ereignissignale detektiert werden oder nach erfolgter Rektifizierung keine Paare einander zuordenbarer Ereignissignale mit einer zweiten Koordinatenrichtung innerhalb eines vorgegebenen Bereichs detektiert werden, in vorgegebenen Zeitabständen jeweils eine Positionsinformation basierend auf den jeweils zuletzt ermittelten Paaren zu erstellen.

Eine bevorzugte Detektion des strukturierten Lichtmusters sieht vor, dass vor dem Sensor ein optischer Filter angeordnet ist, der, vorzugsweise ausschließlich, für Licht durchlässig ist, dessen Wellenlängenbereich dem Wellenlängenbereich des elektromagnetischen Wellenmusters entspricht, und/oder dass der Sensor, insbesondere ausschließlich, für elektromagnetische Wellen dieser Wellenlängenbereiche sensitiv ist.

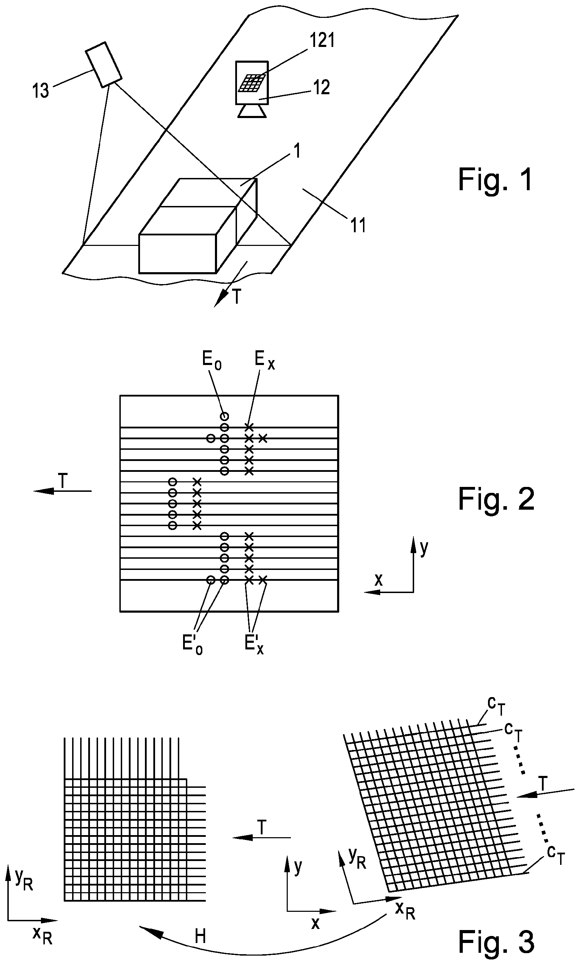

In Fig. 1 ist eine Aufnahme- und Transportvorrichtung dargestellt, mit der ein zu erfassender Gegenstand transportiert und im Rahmen seines Transports erfasst wird. Fig. 2 zeigt schematisch im Zuge des Transports eines Gegenstands ermittelte Daten. Fig. 3 zeigt eine bevorzugte Form der Rektifizierung der Abbildungsgeometrie.

Wie in Fig. 1 dargestellt, wird ein Gegenstand 1 mittels einer Transporteinrichtung 11 durch den Aufnahmebereich eines Sensors 12 bewegt, der im vorliegenden Fall als Flächensensor ausgebildet ist. Der Sensor 12 ist dabei im Winkel zur Transporteinrichtung 11 angeordnet, dh er nimmt die mittels der Transporteinrichtung 11 transportierten Gegenstände 1 nicht senkrecht zur Transportrichtung T auf, sondern in einem Winkel zur Transportrichtung T, sodass der Gegenstand 1 vom Sensor 12 aus in Schrägansicht sichtbar ist.

Beim Sensor 12 handelt es sich um einen Flächensensor mit einer Anzahl von in Zeilen und Spalten angeordneten Einzelsensoren 121. Diese Einzelsensoren 121 sind dabei so ausgestaltet, dass sie die Intensität des bei ihnen einlangenden Lichts messen. Für jeden einzelnen Einzelsensoren 121 ist jeweils eine dem jeweiligen Einzelsensor 121 nachgeschaltete Schwellenwertschaltung vorhanden, der ein Messwert für die Intensität des beim Einzelsensor 121 einfallenden Lichts zugeführt ist. Diese Schwellenwertschaltung weist einen Speicher für zwei Schwellenwerte auf, nämlich einen oberen und einen unteren Intensitätsschwellenwert. Solange sich die vom Einzelsensor 121 ermittelte Lichtintensität innerhalb des durch die beiden Schwellenwerte vorgegebenen Bereichs befindet, bleibt die Schwellenwertschaltung inaktiv und gibt keine Signale ab. Überschreitet hingegen der vom Einzelsensor 121 gemessene Intensitätswert den oberen Intensitätsschwellenwert, so gibt die Schwellenwertschaltung ein Ereignissignal ab, das eine Intensitätssteigerung bzw ein Hellerwerden indiziert. Unterschreitet der vom Einzelsensor 121 gemessene Intensitätswert den unteren Intensitätsschwellenwert, so gibt die Schwellenwertschaltung ein Ereignissignal ab, das eine Intensitätssenkung bzw ein Dunklerwerden indiziert. Die auf diese Weise erstellten Ereignissignale werden zusammengefasst, wobei zur Kennzeichnung des Auftretens der detektierten Intensitätsänderungen jedem Ereignissignal jeweils noch die Position des jeweiligen Einzelsensors 121 in Form einer Zeilen- und Spaltenposition sowie auch der Zeitpunkt des Auftretens der Intensitätsänderung zugewiesen wird.

Nach der Detektion der Intensitätsänderung durch eine Schwellenwertschaltung werden die Schwellenwerte neu gesetzt, die Schwellenwertschaltung wird dabei an die Intensität angepasst, die das vom Einzelsensor 121 empfangene Licht nach der Schwellenwertüber- bzw -unterschreitung enthält. Der aktuelle Intensitätswert des Einzelsensors 121 befindet sich dann innerhalb eines Intensitätsbereichs, der durch den oberen und unteren Schwellenwert festgelegt wird. Bevorzugterweise kann der vom Einzelsensor 121 abgegebene Intensitätswert zu einem vorgegebene Zeitpunkt nach der Schwellenwertüber- bzw -unterschreitung zur Festlegung der neuen Schwellenwerte herangezogen werden. Die Intensitätsschwellenwert können gegenüber diesem Intensitätswert um einen vorgegebenen Wert versetzt werden. Die Neufestsetzung der Intensitätsschwellenwerte erfolgt pixelweise, dh für jeden Einzelsensor 121 separat.

Aufgrund der Höhe des Gegenstands stellt sich das Abbild der Laserlinie 13, das vom Sensor 12 erfasst wird, als geknickte Linie dar. Bewegt sich der Gegenstand im Aufnahmebereich des Sensors 12 und variiert die Höhe des Gegenstands 1 in Transportrichtung geringfügig, wird das Laserlicht des Lasers 13 jeweils auf unterschiedliche Einzelsensoren 121 projiziert. In der beispielhaften Darstellung der Fig. 2 sind Ereignisse an der jeweiligen Position des diese erkennenden Sensors 12 dargestellt. Dabei wurden lediglich Ereignisse herangezogen, die innerhalb eines Zeitfensters aufgenommen wurden. Diejenigen Ereignisse, die ein Hellerwerden indizieren, werden mit einem o dargestellt, diejenigen Ereignisse, die ein Dunklerwerden indizieren, werden mit einem x dargestellt.

Um eine Erfassung des dreidimensionalen Abbilds des Gegenstands 1 zu ermitteln, wird mittels eines Lasers 13 eine Laserlinie auf den Gegenstand 1 projiziert. Diese Laserlinie erstreckt sich typischerweise über die gesamte Breite der Transporteinrichtung 11, vorzugsweise so weit, dass alle dem Laser 13 zugewandte Oberflächenbereiche des zu untersuchenden Gegenstands 1 während der Bewegung zumindest einmal mit dem Laser 13 bestrahlt werden. Im Zusammenhang mit der Erfindung ist es jedoch weder zwingend erforderlich einen Laser 13 zu verwenden, noch ein Linienmuster zu projizieren. Im Zusammenhang mit der Erfindung reicht es aus, wenn ein strukturiertes Muster elektromagnetischer Wellen verwendet wird, das den Gegenstand in den zu beobachtenden Gegenstandsbereichen erfasst bzw beleuchtet. Besonders vorteilhaft ist es auch, blaues Laserlicht zu verwenden.

Befindet sich initial kein Gegenstand 1 auf der Transporteinrichtung 11, so nehmen einige Einzelsensoren 121 Reflexionen des Laserlichts an der Oberfläche des vom Laserlicht bestrahlten Bereichs der Transporteinrichtung 11 auf. Tritt nun ein Gegenstand in den Aufnahmebereich des Sensors 12, so trifft das Laserlicht nicht mehr ausschließlich auf die Transporteinrichtung 11, sondern auch auf einen Teil der Oberfläche des Gegenstands 1. Da die Blickrichtung des Sensors 12 sowie die Einfallsrichtung des Laserlichts auf den Gegenstand 1 zueinander im Winkel stehen, ändert sich durch das Eintreten des Gegenstands 1 auch diejenigen Positionen der Einzelsensoren 121, auf denen der reflektierte Teil des Laserlichts zu sehen ist. Die Menge der Positionen der Einzelsensoren 121, auf die der reflektierte Teil des Laserlichts eintrifft, wird im Folgenden Reflexionszone bezeichnet.

Um die Reflexionszone möglichst einfach und störungsfrei detektieren zu können, ist es von Vorteil, wenn die Einzelsensoren 121 möglichst ausschließlich das Laserlicht empfangen. Zu diesem Zweck kann zB vorgesehen sein, dass vor den Einzelsensoren 121 ein Filter angeordnet ist, der ausschließlich für das Licht des Lasers 13 durchlässig ist oder das - mit Ausnahme des Laserlichts - möglichst alle Lichtanteile des vom Gegenstand 1 abgestrahlten Lichts absorbiert und nicht zu den Einzelsensoren 121 durchlässt. Alternativ ist es auch möglich, dass die Einzelsensoren 121 selbst auf den Laser 13 abgestimmt sind und, zB aufgrund ihrer Bauart, besonders für das Laserlicht sensitiv sind.

Zu beachten ist, dass die Reflexionszone nicht unmittelbar festgestellt werden kann, insbesondere weil aufgrund der Bauweise des Sensors 12 überhaupt kein Intensitätsbild zur Verfügung steht, sondern Bildinformationen nur in Form von mit den Schwellenwertschaltungen erstellten Ereignissignalen vorliegen. Dies bedeutet, dass die Reflexionszone selbst nicht unmittelbar detektiert werden kann, sondern ausschließlich die Auswirkungen ihrer Änderungen.

Im vorliegenden Ausführungsbeispiel wird eine Kalibrierung des Sensors 12 gegenüber der Transporteinrichtung 11 vorgenommen, die es ermöglicht, die Richtung der Transportrichtung T zu ermitteln. Zu diesem Zweck wird eine Rektifizierung des Bildes - bzw der Koordinaten der ermittelten Ereignisse Eₒ, Eₓ - in Form einer Bildtransformation H vorgegeben. Diese Transformation H erlaubt es, dass Oberflächenbereiche von Gegenständen 1, die parallel zur Transportrichtung T bewegt werden, auf Bildbereiche des transformierten Bilds abgebildet werden, die in einer zweiten Koordinatenrichtung y_{R} übereinstimmen. Das Abbild eines in Transportrichtung T bewegten Gegenstands 1 bewegt sich also in einer dazu parallelen ersten Koordinatenrichtung x_{R} im Bild. Die zweite Koordinatenrichtung y_{R} des Bilds erstreckt sich normal zur Transportrichtung T und normal zur Ebene, gegenüber der eine Höheninformation gemessen werden soll. Typische Möglichkeiten, Rektifizierung von Abbildungen vorzunehmen, werden beispielsweise in folgendem Lehrbuch beschrieben: Hartley, R., & Zisserman, A. (2004). Multiple View Geometry in Computer Vision (2nd ed.), Cambridge: Cambridge University Press. doi:10.1017/CBO9780511811685

Abweichend von einer solchen Rektifizierung ist es auch möglich, die einzelnen Bildkurven er, auf die Oberflächenbereiche von Gegenständen 1, die parallel zur Transportrichtung T bewegt werden, abgebildet werden, vorab zu ermitteln und für die weitere Verarbeitung zur Verfügung zu halten. Insbesondere kann in den Bildbereichen, in denen Oberflächenbereiche von Gegenständen 1, die vom Laserlicht getroffen werden, abgebildet werden, eine Transportrichtung bzw Bildkurven c_{T} zur Verfügung gestellt werden, auf die einzelne Oberflächenbereiche im Zuge der Bewegung entlang der Transportrichtung T abgebildet werden.

Weiters wird zur dreidimensionalen Vermessung des Gegenstands 1 die im Folgenden dargestellte Triangulierung vorgegeben. Da das einfallende Licht des Lasers 13 und die Blickrichtung des der Sensors 12 zueinander im Winkel sowie im Winkel zur Transportrichtung T der Transporteinrichtung 11 stehen, kann bei Detektion des Laserlichts im Bild des Sensors 12 durch einen Einzelsensor 121 auf die genaue Position des aufgenommenen Gegenstandsbereichs geschlossen werden, dessen Licht vom jeweiligen Einzelsensor 121 detektiert wird. Jeder Einzelsensor 121 ist damit eineindeutig mit einer dreidimensionalen Position assoziiert. Grundsätzlich kann jedem Einzelsensor 121 auch eine weniger detailreiche Positionsinformation zugeordnet werden, insbesondere kann es ausreichen, dem Einzelsensor 121 eine Tiefeninformation zuzuweisen.

Kann also von einem Einzelsensor 121 Laserlicht festgestellt werden, so kann auch festgestellt werden, dass sich ein Oberflächenbereich zum Aufnahmezeitpunkt an einem gegenüber dem Sensor 12 und dem Laser 13 vorgegebenen und durch Triangulation bestimmbaren Raumpunkt befindet. Dieser Raumpunkt stellt in diesem Fall eine dreidimensionale Positionsinformation dar. Kennt man zusätzlich noch die genaue Bewegungsposition des Gegenstands 1 in Transportrichtung T zum Aufnahmezeitpunkt, so können die im Zuge der Transportbewegung ermittelten Raumpunkte zu einer dreidimensionalen Punktewolke zusammengesetzt werden.

Anders als bei einer Aufnahme und Verarbeitung von Intensitätswerten können die einzelnen Punkte der Reflexionszone nicht unmittelbar aus dem jeweiligen Bild bestimmt werden. Vielmehr wird die Reflexionszone aus den Ereignissignalen rekonstruiert.

Hierfür macht sich die Erfindung den folgenden Effekt zunutze: Gelangt ein Gegenstand 1 in den Aufnahmebereich des Sensors 12 und in den Strahlungsbereich des Lasers 13, so ändert sich aufgrund der Geometrie des Gegenstands 1 die Reflexionszone im Bild. Diese Bewegung der Reflexionszone führt dazu, dass die Einzelsensoren 121, an denen sich die Reflexionszone bislang befunden hat nicht mehr vom Licht des Lasers 13 bestrahlt werden, diese Einzelsensoren 121 geben aufgrund des Abfalls der bei ihnen einfallenden Lichtintensität jeweils ein Ereignissignal ab, das eine Intensitätsverringerung, also ein Dunklerwerden indiziert. Einzelsensoren 121, die nunmehr in der Reflexionszone befinden, werden nunmehr vom Laser 13 bestrahlt, diese Einzelsensoren 121 geben aufgrund des Anstiegs der bei ihnen einfallenden Lichtintensität jeweils ein Ereignissignal ab, das eine Intensitätserhöhung, also ein Hellerwerden indiziert.

In weiterer Folge wird nun nach zusammengehörigen Ereignissignalen gesucht, die nach erfolgter Rektifizierung auf derselben Koordinatenposition in Transportrichtung liegen. Aufgrund der Transformation weisen die rektifizierten Koordinaten keine ganzzahligen Werte auf bzw werden durch entsprechende Rundung ermittelt. Zwei Ereignissignale können in diesem Sinne auch dann als zusammengehörig angesehen werden, wenn ihre zweite Koordinatenrichtung (y_{R}) normal zur Transportrichtung geringfügig, beispielsweise um weniger als zwei Pixel, abweichen.

Alternativ kann bei Fehlen einer entsprechenden Rektifizierung auch nach Bildpositionen bzw Sensorkoordinaten gesucht werden, die auf derselben zuvor durch Kalibrierung explizit ermittelten Bildkurve er liegen. Auch in diesem Fall können zwei Ereignissignale als auf derselben Bildkurve c_{T} liegend angesehen werden, wenn diese nicht exakt auf derselben Bildkurve liegen, sondern geringfügig abweichen.

Zwei Ereignissignale gehören in diesem Sinne zusammen und sind repräsentativ für dieselbe Änderung, wenn sie innerhalb eines vorgegebenen Zeitbereichs auftreten, dh dass die ihnen bei ihrer Erstellung zugewiesenen Zeitpunkte voneinander nur gering, zB um weniger als 10 ms abweichen. Darüber hinaus werden die Ereignissignale einander dann zugeordnet, wenn eines von ihnen ein Hellerwerden, das andere von ihnen ein Dunklerwerden indiziert, dh das reflektierte Laserlicht wird von einem der Einzelsensoren 121 nicht mehr detektiert, während es nunmehr vom jeweils anderen Einzelsensor 121 erfasst wird. In diesem Sinne können beispielsweise die beiden in Fig. 2 dargestellten Ereignissignale Eₒ, Eₓ als zusammengehörig angesehen und einander zugeordnet werden.

Auch wenn vorstehend eine Zuordnung von zwei Ereignissignalen Eₒ, Eₓ dargestellt wurde, kann auch die Situation eintreten, dass innerhalb eines vorgegebenen Zeitbereichs bzw Bildbereichs mehrere Ereignissignale auftreten, die auf diese Weise zu einem Paar im weiteren Sinne zusammengefügt werden können. Wesentlich für das Vorliegen eines solchen Paars sind nämlich nicht, dass dieses ausschließlich zwei Ereignissignale umfasst, sondern dass das Paar zumindest ein erstes Ereignissignal aufweist, das ein Hellerwerden indiziert und ein zweites Ereignissignal, das ein Dunklerwerden indiziert. Sofern die Laserlinie im Bild breiter ist als lediglich ein Pixel können selbstverständlich gleichartige Ereignissignale E'ₒ, E'ₓ auch in benachbarten Einzelsensoren 121 auftreten. Sofern diese Einzelsensoren 121 eng beieinanderliegen, kann eine gemeinsame Position dieser gleichartigen Ereignissignale zB durch Mittelung erstellt werden und dass diese gemeinsame Position für die Triangulierung herangezogen werden.

Kann eine solche Zuordnung gefunden werden, wird aufgrund des Einzelsensoren 121, in dem das Hellerwerden des Laserlichts ermittelt wurde, durch Triangulierung ein dreidimensionaler Punkt ermittelt, der als Oberflächenpunkt des Gegenstands 1 angesehen wird.

In Zeitbereichen, in denen sich derjenige Oberflächenbereich des Gegenstands 1, der vom Licht des Lasers 13 erfasst wird, nicht ändert, weil der in diesem Zeitraum erfasste Teilbereich des Gegenstands in Transportrichtung seine Form nicht ändert, liefert der Sensor 12 bis auf durch störungsbedingte Helligkeitsschwankungen auftretende Artefakte überhaupt keine Ereignissignale. Insbesondere können in diesem Zeitbereich überhaupt keine Paare voneinander zuordenbaren Ereignissignalen erkannt werden. Ebenso kann der Fall auftreten, dass einander zuordenbare Ereignissignale für einzelne Koordinatenwerte oder Bildkurven nicht erkannt werden, weil der Gegenstand in diesen Teilbereichen keine Änderung in Transportrichtung aufweist. In diesem Fall wird bei der Ermittlung des dreidimensionalen Modells des Gegenstands davon ausgegangen, dass sich dessen abgebildeter Oberflächenpunkt bis zum nächsten Auftreten eines Paars zuordenbarer Ereignissignale überhaupt nicht ändert, dh der betreffende Oberflächenbereich erstreckt sich parallel zur Transportrichtung T. Sofern eine hinreichend mit Punkten überdeckte Punktwolke des Gegenstands erstellt werden soll, kann vorgesehen sein, dass in vorgegebenen Zeitintervallen Punkte in die Punktwolke unter Heranziehung des jeweils zuletzt ermittelten Paars zuordenbarer Ereignissignale eingefügt werden. Diese Punkte sind dabei entsprechend der Fortbewegung des Gegenstands 1 verschoben in die Punktwolke einzutragen.

Sämtliche beschriebenen Vorgehensweisen werden von einer dem Sensor 12 nachgeschalteten Verarbeitungseinheit vorgenommen. Diese hält dann eine Repräsentation der dreidimensionalen Struktur zur weiteren Verarbeitung bereit.

Selbstverständlich können auch noch weitere Kompensationen von Fehlern oder Effekten des Sensors bzw seiner Optik vorgenommen werden. Insbesondere kann die Verarbeitungseinheit dazu ausgebildet sein, vor oder nach dem Rektifizieren, eine zusätzliche Transformation auf die Koordinatenpositionen der Ereigniskoordinaten vorzunehmen, die die durch die Linse des Sensors 12 verursachte Verzerrung kompensiert.

## Patentansprüche

1. Verfahren zur Erfassung der dreidimensionalen Struktur eines Gegenstands (1),
wobei der Gegenstand (1) durch den Aufnahmebereich eines Sensors (12) in Form eines zweidimensionalen Flächensensors bewegt wird, wobei der Sensor (12) eine Vielzahl von in Zeilen und Spalten angeordneten Einzelsensoren (121) aufweist,
wobei die Einzelsensoren (121) dazu ausgebildet sind, pixelweise Ereignissignale abzugeben, und zwar
- ein Hellerwerden indizierende Ereignissignale, wenn der Intensitätswert des beim jeweiligen Pixel einlangenden Lichts einen vorgegebenen oberen Schwellenwert überschreitet, und
- ein Dunklerwerden indizierende Ereignissignale, wenn der Intensitätswert des beim jeweiligen Pixel einlangenden Lichts einen vorgegebenen unteren Schwellenwert unterschreitet,
- wobei im Fall der Überschreitung oder Unterschreitung und nachfolgenden Abgabe eines Ereignissignals der obere und untere Schwellenwert des jeweiligen Einzelsensors (121) angepasst wird, sodass sich der aktuelle Intensitätswert innerhalb des angepassten oberen und unteren Schwellenwerts befindet,
- wobei zumindest ein Teil des Gegenstands (1), der sich im Aufnahmebereich des Sensors (12) befindet, mit einem strukturierten Muster elektromagnetischer Wellen bestrahlt wird, insbesondere einem Lichtmuster, vorzugsweise erstellt durch einen Laser (13), wobei das strukturierte Muster besonders bevorzugt eine Laserline ist,
- wobei in den Ereignissignalen nach Paaren umfassend zumindest ein Hellerwerden indizierendes erstes Ereignissignal und zumindest einem, insbesondere zeitlich nachfolgenden, ein Dunklerwerden indizierendes zweites Ereignissignal, gesucht wird, wobei die dem Paar zugehörigen Ereignissignale
- innerhalb eines, durch die Transportgeschwindigkeit vorgegebenen, Zeitfensters erstellt wurden und
- auf derselben Bildkurve liegen, auf die Oberflächenbereiche von Gegenständen, die parallel zur Transportrichtung (T) bewegt werden, abgebildet werden, und
- die insbesondere einen Abstand oder eine Relativposition zueinander haben, der oder die innerhalb eines vorgegebenen Toleranzbereichs liegt,
- wobei ausgehend von den Koordinatenwerten des ersten und/oder zweiten Ereignissignals der so aufgefundenen Paare eine Positionsinformation umfassend einen Tiefenwert, gegebenenfalls die dreidimensionale Position des vom Lichtmuster beleuchteten Teils der Oberfläche des Gegenstands, ermittelt wird, und
- wobei die einzelnen ermittelten Positionsinformationen entsprechend dem Aufnahmezeitpunkt, der Transportgeschwindigkeit und der Zeit des Auftretens des Paars in Transportrichtung verschoben und eine dreidimensionale Struktur, die den Gegenstand repräsentiert, basierend auf diesen Positionsinformationen erstellt wird.

2. Verfahren nach Anspruch 1, **dadurch gekennzeichnet, dass** die einzelnen vom Sensor bzw. den Einzelsensoren (121) erstellten Ereignissignale hinsichtlich ihrer Bildposition und/oder Sensorkoordinaten rektifiziert werden, sodass jedem Ereignissignal zwei rektifizierte Koordinaten zugewiesen werden, wobei
- eine erste Koordinatenrichtung (x_{R}) des Ereignissignals der Position des aufgenommenen Gegenstands dessen Position in Transportrichtung (T) entspricht, und/oder
- dass die zweite Koordinatenrichtung (y_{R}) des Ereignissignals im Winkel zur Transportrichtung (T) steht, vorzugsweise normal zur Transportrichtung (T) und/oder normal und zu einer Ebene, gegenüber der eine Tiefeninformation zu ermitteln ist, und/oder
- dass Ereignissignale, die auf derselben Bildkurve liegen, auf die Oberflächenbereiche von Gegenständen, die parallel zur Transportrichtung bewegt werden, abgebildet werden, dieselbe zweite Koordinatenrichtung (y_{R}) zugewiesen wird.

3. Verfahren nach Anspruch 2, **dadurch gekennzeichnet, dass** für die Rektifizierung eine lineare Koordinatentransformation herangezogen wird, bei der die Bildpositionen (x, y) und/oder Sensorkoordinaten der Ereignissignale in die Koordinatenrichtungen (x_{R}, y_{R}) der rektifizierten Koordinaten umgerechnet werden, wobei zur Umrechnung vorzugsweise eine homogene Koordinatentransformation unter Verwendung einer 3x3 Matrix vorgenommen wird.

4. Verfahren nach einem der vorangehenden Ansprüche, **dadurch gekennzeichnet, dass**, insbesondere vor oder nach dem Rektifizieren, eine Transformation vorgenommen wird, mit der eine Entzerrung der durch die Linse verursachten Verzerrung vorgenommen wird.

5. Verfahren nach einem der vorangehenden Ansprüche, **dadurch gekennzeichnet, dass** für den Fall, dass innerhalb eines vorgegebenen Zeitbereichs
- innerhalb einer Bildkurve, auf die Oberflächenbereiche von Gegenständen, die parallel zur Transportrichtung bewegt werden, keine Paare einander zuordenbarer Ereignissignale detektiert werden oder
- nach erfolgter Rektifizierung keine Paare einander zuordenbarer Ereignissignale mit einer zweiten Koordinatenrichtung (y_{R}) innerhalb eines vorgegebenen Bereichs detektiert werden, in vorgegebenen Zeitabständen jeweils eine Positionsinformation basierend auf den jeweils zuletzt ermittelten Paaren erstellt werden.

6. Verfahren nach einem der vorangehenden Ansprüche, **dadurch gekennzeichnet, dass**
- vor dem Sensor (12) ein optischer Filter angeordnet ist, der, vorzugsweise ausschließlich, für Licht durchlässig ist, dessen Wellenlängenbereich dem Wellenlängenbereich des elektromagnetischen Wellenmusters entspricht, und/oder
- dass der Sensor (12), insbesondere ausschließlich, für elektromagnetische Wellen dieser Wellenlängenbereich sensitiv ist.

7. Anordnung zur Erfassung der dreidimensionalen Struktur eines Gegenstands (1), umfassend eine Transporteinrichtung zum Transport eines Gegenstands (1) einen Sensor (12) in Form eines Flächensensors umfassend eine Anzahl von in Zeilen und Spalten angeordneten Einzelsensoren (121) zur Erfassung des Gegenstands (1) im Zuge seiner Bewegung mittels der Transporteinrichtung, wobei die Einzelsensoren (121) dazu ausgebildet sind, pixelweise Ereignissignale abzugeben, und zwar
- ein Hellerwerden indizierende Ereignissignale, wenn der Intensitätswert des beim jeweiligen Pixel einlangenden Lichts einen vorgegebenen oberen Schwellenwert überschreitet, und
- ein Dunklerwerden indizierende Ereignissignale, wenn der Intensitätswert des beim jeweiligen Pixel einlangenden Lichts einen vorgegebenen unteren Schwellenwert unterschreitet,
- wobei im Fall der Überschreitung oder Unterschreitung und nachfolgenden Abgabe eines Ereignissignals der obere und untere Schwellenwert des jeweiligen Einzelsensors (12) angepasst wird, sodass sich der aktuelle Intensitätswert innerhalb des angepassten oberen und unteren Schwellenwerts befindet,
- wobei die Anordnung eine Lichtquelle, insbesondere einen Laser (13), umfasst, der zumindest einen Teil des Gegenstands (1), der sich im Aufnahmebereich des Sensors (12) befindet, mit einem strukturierten Muster elektromagnetischer Wellen bestrahlt, insbesondere einem Lichtmuster, vorzugsweise durch ein strukturiertes Muster in Form eine Laserline,
- wobei dem Sensor eine Verarbeitungseinheit nachgeschaltet ist, die dazu ausgebildet ist, in den vom Sensor (12) erstellten Ereignissignalen (E) nach Paaren (Eₒ, Eₓ) umfassend zumindest ein Hellerwerden indizierendes erstes Ereignissignal und zumindest einem, insbesondere zeitlich nachfolgenden, ein Dunklerwerden indizierendes zweites Ereignissignal, zu suchen sucht, wobei die dem Paar zugehörigen Ereignissignale
- innerhalb eines, durch die Transportgeschwindigkeit vorgegebenen, Zeitfensters erstellt wurden und
- auf derselben Bildkurve liegen, auf die Oberflächenbereiche von Gegenständen, die parallel zur Transportrichtung (T) bewegt werden, abgebildet werden, und
- die insbesondere einen Abstand oder eine Relativposition zueinander haben, der oder die innerhalb eines vorgegebenen Toleranzbereichs liegt,
- wobei die Verarbeitungseinheit dazu ausgebildet ist,
- ausgehend von den Koordinatenwerten des ersten und/oder zweiten Ereignissignals (Eₒ, Eₓ) der so aufgefundenen Paare eine Positionsinformation umfassend einen Tiefenwert, gegebenenfalls die dreidimensionale Position des vom Lichtmuster beleuchteten Teils der Oberfläche des Gegenstands, zu ermitteln, und
- die einzelnen ermittelten Positionsinformationen entsprechend dem Aufnahmezeitpunkt, der Transportgeschwindigkeit und der Zeit des Auftretens des Paars in Transportrichtung zu verschieben und eine dreidimensionale Struktur, die den Gegenstand repräsentiert, basierend auf diesen Positionsinformationen zu erstellen.

8. Anordnung nach Anspruch 7, **dadurch gekennzeichnet, dass** die Verarbeitungseinheit dazu ausgebildet ist, eine Transformation (H) vorzunehmen, die die einzelnen vom Sensor (12) bzw. den Einzelsensoren (121) erstellten Ereignissignale hinsichtlich ihrer Bildposition rektifiziert, sodass die Transformation jedem Ereignissignal im Zuge der Transformation (H) zwei rektifizierte Koordinaten (x_{R}, y_{R}) zuweist, wobei
- eine erste Koordinatenrichtung (x_{R}) des Ereignissignals der Position des aufgenommenen Gegenstands dessen Position in Transportrichtung (T) entspricht, und/oder
- dass die zweite Koordinatenrichtung (y_{R}) des Ereignissignals im Winkel zur Transportrichtung (T) steht, vorzugsweise normal zur Transportrichtung (T) und/oder normal und zu einer Ebene, gegenüber der eine Tiefeninformation zu ermitteln ist, und/oder
- dass Ereignissignale, die auf derselben Bildkurve (c_{T}) liegen, auf die Oberflächenbereiche von Gegenständen, die parallel zur Transportrichtung bewegt werden, abgebildet werden, dieselbe zweite Koordinatenrichtung (y_{R}) zugewiesen wird.

9. Anordnung nach Anspruch 8, **dadurch gekennzeichnet, dass** für die Rektifizierung in einer lineare Koordinatentransformation besteht, die die Bildpositionen (x, y) der Ereignissignale in die Koordinatenrichtungen (x_{R}, y_{R}) der rektifizierten Koordinaten transformiert, wobei die Umrechnung vorzugsweise durch eine homogene Koordinatentransformation unter Verwendung einer 3x3 Matrix festgelegt ist.

10. Anordnung nach einem der Ansprüche 7 bis 9, **dadurch gekennzeichnet, dass** die Verarbeitungseinheit dazu ausgebildet ist, insbesondere vor oder nach dem Rektifizieren, eine Transformation vorzunehmen, die die durch die Linse des Sensors (12) verursachte Verzerrung kompensiert.

11. Anordnung nach einem der Ansprüche 7 bis 10, **dadurch gekennzeichnet, dass** die Verarbeitungseinheit dazu ausgebildet ist, für den Fall, dass innerhalb eines vorgegebenen Zeitbereichs
- innerhalb einer Bildkurve, auf die Oberflächenbereiche von Gegenständen, die parallel zur Transportrichtung bewegt werden, keine Paare einander zuordenbarer Ereignissignale detektiert werden oder
- nach erfolgter Rektifizierung keine Paare einander zuordenbarer Ereignissignale mit einer zweiten Koordinatenrichtung (y_{R}) innerhalb eines vorgegebenen Bereichs detektiert werden,
in vorgegebenen Zeitabständen jeweils eine Positionsinformation basierend auf den jeweils zuletzt ermittelten Paaren zu erstellen.

12. Anordnung nach einem der Ansprüche 7 bis 11, **dadurch gekennzeichnet, dass**
- vor dem Sensor (12) ein optischer Filter angeordnet ist, der, vorzugsweise ausschließlich, für Licht durchlässig ist, dessen Wellenlängenbereich dem Wellenlängenbereich des elektromagnetischen Wellenmusters entspricht, und/oder
- dass der Sensor (12), insbesondere ausschließlich, für elektromagnetische Wellen dieser Wellenlängenbereiche sensitiv ist.

## Claims

1. Method for detecting the three-dimensional structure of an object (1),
wherein the object (1) is moved through the acquisition region of a sensor (12) in the form of a two-dimensional surface sensor, wherein the sensor (12) has a multiplicity of individual sensors (121) arranged in rows and columns,
wherein the individual sensors (121) are configured to output event signals pixel by pixel, namely
- event signals indicating a brightening, when the intensity value of the light reaching the respective pixel overshoots a predetermined upper threshold value, and
- event signals indicating a darkening, when the intensity value of the light reaching the respective pixel undershoots a predetermined lower threshold value,
- wherein in the case of the overshooting or undershooting and subsequent output of an event signal, the upper and lower threshold value of the respective individual sensor (121) is adapted, such that the current intensity value is within the adapted upper and lower threshold value,
- wherein at least a part of the object (1), which is located in the acquisition region of the sensor (12), is irradiated with a structured pattern of electromagnetic waves, in particular a light pattern, preferably generated by a laser (13), wherein the structured pattern is especially preferably a laser line,
- wherein in the event signals, pairs are sought comprising at least first event signal indicating a brightening and at least one, in particular temporally subsequent, second event signal indicating a darkening, wherein the event signals assigned to the pair
- were generated within a time window predetermined by the transport speed and
- lie on the same image curve on which surface regions of objects which are moved parallel to the transport direction (T) are depicted, and
- which have in particular a spacing from or a relative position to one another which lies within a predetermined tolerance range,
- wherein starting from the coordinate values of the first and/or second event signal of the pairs found in this way, a positional information comprising a low value, where appropriate the three-dimensional position of the part of the surface of the object illuminated by the light pattern, is determined, and
- wherein the individual determined items of positional information corresponding to the point in time of the recording, the transport speed and the time of the occurrence of the pair are displaced in transport direction and a three-dimensional structure which represents the object is generated based on these items of positional information.

2. Method according to claim 1, **characterized in that** the individual event signals generated by the sensor or the individual sensors (121) are rectified with regard to their image position and/or sensor coordinates, such that to rectified coordinates are assigned to each event signal, wherein
- a first coordinate direction (x_{R}) of the event signal corresponds to the position of the recorded object its position in transport direction (T), and/or
- that the second coordinate direction (y_{R}) of the event signal stands at an angle to the transport direction (T), preferably perpendicularly to the transport direction (T) and/or perpendicularly to a plane with respect to which a depth information is to be determined, and/or
- that event signals which lie on the same image curve are depicted on the surface regions of objects which are moved parallel to the transport direction, are assigned the same second coordinate direction (y_{R}).

3. Method according to claim 2, **characterized in that** for the rectification A linear coordinate transformation is used in which the image positions (x, y) and/or sensor coordinates event signals are converted into the coordinate directions (x_{R}, y_{R}) of the rectified coordinates, wherein for the conversion preferably a homogeneous coordinate transformation using a 3x3 matrix is undertaken.

4. Method according to any of the preceding claims, **characterized in that**, in particular prior to or after the rectification, a transformation is undertaken with which a distortion correction of the distortion caused by the lens is undertaken.

5. Method according to any of the preceding claims, **characterized in that** in the case that within a predetermined time period
- within an image curve, on the surface regions of objects which are moved parallel to the transport direction, no pairs of event signals which can be assigned to one another are detected or
- after a rectification has been carried out, no pairs of event signals which can be assigned to one another with a second coordinate direction (y_{R}) are detected within a predetermined range, at predetermined time intervals in each case a positional information is generated based on the respectively most recently determined pairs.

6. Method according to any of the preceding claims, **characterized in that**
- an optical filter is arranged in front of the sensor (12), which is permeable for, preferably exclusively for, light, the wavelength range of which is equal to the wavelength range of the electromagnetic wave pattern, and/or
- that the sensor (12) is sensitive for, in particular exclusively for, electromagnetic waves of this wavelength range.

7. Arrangement for detecting the three-dimensional structure of an object (1), comprising a transport apparatus for the transport of an object (1), a sensor (12) in the form of a surface sensor comprising a number of sensors (121) arranged in rows and columns for detecting the object (1) in the course of its movement carried out by means of the transport apparatus,
wherein the individual sensors (121) are configured to output event signals pixel by pixel, namely
- event signals indicating a brightening, when the intensity value of the light reaching the respective pixel overshoots a predetermined upper threshold value, and
- event signals indicating a darkening, when the intensity value of the light reaching the respective pixel undershoots a predetermined lower threshold value,
- wherein in the case of the overshooting or undershooting and subsequent output of an event signal, the upper and lower threshold value of the respective individual sensor (12) is adapted, such that the current intensity value is within the adapted upper and lower threshold value,
- wherein the arrangement includes a light source, in particular a laser (13), which irradiates at least a part of the object (1) which is located in the acquisition region of the sensor (12), with a structured pattern of electromagnetic waves, in particular a light pattern, preferably with a structured pattern in the form of a laser line,
- wherein a processing unit is connected downstream of the sensor which is configured to search in the event signals (E) generated by the sensor (12) for pairs (Eₒ, Eₓ) comprising at least one first event signal indicating a brightening and at least one, in particular temporally subsequent, second event signal indicating a darkening, wherein the event signals assigned to the pair
- were generated within a time window predetermined by the transport speed and
- lie on the same image curve on which surface regions of objects which are moved parallel to the transport direction (T) are depicted, and
- which have in particular a spacing from or a relative position to one another which lies within a predetermined tolerance range,
- wherein the processing unit is configured,
- starting from coordinate values of the first and/or second event signal (Eₒ, Eₓ) of the pairs discovered in this way to determine a positional information comprising a depth value, where appropriate the three-dimensional position of the part of the surface of the object illuminated by the light pattern, and
- to displace in transport direction the individual determined items of positional information corresponding to the point of time of the acquisition, the transport speed, and the time of the occurrence of the pair, and to create a three-dimensional structure which represents the object on the basis of these items of positional information.

8. Arrangement according to claim 7, **characterised in that** the processing unit is configured to undertake a transformation (H) which rectifies individual event signals generated by the sensor (12) or the individual sensors (121) with regard to their image position, such that the transformation assigns to each event signal in the course of the transformation (H) two rectified coordinates (x_{R}, y_{R}), wherein
- a first coordinate direction (XR) of the event signal of the position of the acquired object corresponds to its position in transport direction (T), and/or
- that the second coordinate direction (y_{R}) of the event signal stands at an angle to the transport direction (T), preferably perpendicularly to the transport direction (T) and/or perpendicularly to a plane with respect to which a depth information is to be determined, and/or
- that event signals which lie on the same image curve (c_{T}) on which surface regions of objects, which are moved parallel to the transport direction, are depicted, are assigned the same second transport direction (y_{R}).

9. Arrangement according to 8, **characterised in that** the rectification consists in a linear coordinate transformation which transforms the image positions (x, y) of the event signals in the coordinate directions (x_{R}, y_{R}) of the rectified coordinates, wherein the conversion is preferably fixed by a homogeneous coordinate transformation using a 3x3 matrix.

10. Arrangement according to any of claims 7 to 9, **characterized in that** the processing unit is configured, in particular prior to or after the rectification, to undertake a transformation which compensates the distortion caused by the lens of the sensor (12).

11. Arrangement according to any of claims 7 to 10, **characterized in that** the processing unit is configured, in the case that within a predetermined time period
- within an image curve, on the surface regions of objects which are moved parallel to the transport direction, no pairs of event signals which can be assigned to one another are detected or
- after a completed rectification no pairs of event signals which can be assigned to one another with a second coordinate direction (YR) are detected within a predetermined region, in predetermined time intervals to create in each case an item of positional information based on the respectively most recently determined pairs.

12. Arrangement according to any of claims 7 to 11, **characterized in that**
- an optical filter is arranged in front of the sensor (12), which is permeable for, preferably exclusively for, light, the wavelength range of which is equal to the wavelength range of the electromagnetic wave pattern, and/or
- that the sensor (12) is sensitive for, particularly exclusively for, electromagnetic waves of these wavelength ranges.

## Revendications

1. Procédé de détection de la structure tridimensionnelle d'un objet (1),
dans lequel l'objet (1) est déplacé à travers la zone de réception d'un capteur (12) sous la forme d'un capteur de surface bidimensionnel, dans lequel le capteur (12) présente une pluralité de capteurs individuels (121) agencés en lignes et en colonnes,
dans lequel les capteurs individuels (121) sont conçus de manière à émettre des signaux d'événement pixel par pixel, à savoir
- des signaux d'événement indiquant un éclaircissement lorsque la valeur d'intensité de la lumière arrivant au pixel concerné dépasse une valeur seuil supérieure prédéfinie, et
- des signaux d'événement indiquant un assombrissement lorsque la valeur d'intensité de la lumière arrivant au pixel respectif est inférieure à une valeur seuil inférieure prédéfinie,
- dans lequel, dans le cas où la valeur d'intensité est dépassée ou n'est pas atteinte et de l'émission consécutive d'un signal d'événement, les valeurs de seuil supérieure et inférieure du capteur individuel respectif (121) sont adaptées de sorte que la valeur d'intensité actuelle se trouve au sein des valeurs seuils supérieure et inférieure adaptées,
- dans lequel au moins une partie de l'objet (1), qui se trouve dans la zone de réception du capteur (12), est irradiée par un motif structuré d'ondes électromagnétiques, en particulier un motif lumineux, de préférence créé par un laser (13), dans lequel le motif structuré est le plus préférentiellement une ligne laser,
- dans lequel dans les signaux d'événement, des paires sont recherchées comprenant au moins un premier signal d'événement indiquant un éclaircissement et au moins un second signal d'événement indiquant un assombrissement, en particulier celui qui suit dans le temps, dans lequel les signaux d'événement appartenant à la paire
- ont été créés dans une fenêtre de temps prédéfinie par la vitesse de transport, et
- se trouvent sur la même courbe d'image, sur laquelle sont représentées des zones de surface d'objets qui sont déplacés parallèlement à la direction de transport (T), et
- qui présentent notamment une distance ou une position relative l'une par rapport à l'autre qui se situe dans une plage de tolérance prédéfinie,
- dans lequel une information de position comprenant une valeur de profondeur, facultativement la position tridimensionnelle de la partie de la surface de l'objet éclairée par le modèle lumineux, est déterminée à partir des valeurs de coordonnées du premier et/ou du second signal d'événement des paires ainsi trouvées, et
- dans lequel les informations de position individuelles déterminées sont décalées dans la direction de transport en fonction de l'instant d'enregistrement, de la vitesse de transport et de l'heure d'apparition de la paire, et une structure tridimensionnelle qui représente l'objet est créée sur la base de ces informations de position.

2. Procédé selon la revendication 1, **caractérisé en ce que** les différents signaux d'événement générés par le capteur ou les capteurs individuels (121) sont rectifiés en ce qui concerne leur position d'image et/ou leurs coordonnées de capteur, de sorte que deux coordonnées rectifiées sont attribuées à chaque signal d'événement, dans lequel
- une première direction de coordonnées (x_{R}) du signal d'événement de la position de l'objet enregistré correspond à sa position dans la direction de transport (T), et/ou
- **en ce que** la seconde direction de coordonnées (y_{R}) du signal d'événement forme un angle avec la direction de transport (T), de préférence perpendiculaire à la direction de transport (T) et/ou perpendiculaire à un plan par rapport auquel une information de profondeur doit être déterminée, et/ou
- **en ce que** des signaux d'événement, qui se trouvent sur la même courbe d'image, sont reproduits sur les zones de surface d'objets qui sont déplacés parallèlement à la direction de transport, se voient attribuer la même seconde direction de coordonnées (y_{R}).

3. Procédé selon la revendication 2, **caractérisé en ce que** pour la rectification, une transformation de coordonnées linéaire est utilisée, dans laquelle les positions d'image (x, y) et/ou les coordonnées de capteur des signaux d'événement sont converties dans les directions de coordonnées (x_{R}, y_{R}) des coordonnées rectifiées, dans lequel pour la conversion, une transformation de coordonnées homogène est de préférence effectuée en utilisant une matrice 3x3.

4. Procédé selon l'une quelconque des revendications précédentes, **caractérisé en ce que**, en particulier avant ou après la rectification, une transformation est effectuée, avec laquelle une rectification de la distorsion causée par la lentille est effectuée.

5. Procédé selon l'une quelconque des revendications précédentes, **caractérisé en ce que**, dans le cas où, à l'intérieur d'une plage de temps prédéfinie
- à l'intérieur d'une courbe d'image, sur les zones de surface d'objets qui sont déplacés parallèlement à la direction de transport, aucune paire de signaux d'événements pouvant être attribués les uns aux autres n'est détectée ou
- après la réalisation d'une rectification, aucune paire de signaux d'événement pouvant être affectés l'un à l'autre n'est détectée avec une seconde direction de coordonnées (y_{R}) à l'intérieur d'une zone prédéfinie, une information de position basée sur les dernières paires déterminées est respectivement établie à des intervalles de temps prédéfinis.

6. Procédé selon l'une quelconque des revendications précédentes, **caractérisé en ce que**
- un filtre optique est agencé devant le capteur (12), lequel est transparent, de préférence exclusivement, pour la lumière dont la plage de longueurs d'onde correspond à la plage de longueurs d'onde du modèle d'onde électromagnétique, et/ou
- **en ce que** le capteur (12) est sensible, en particulier exclusivement, à des ondes électromagnétiques de cette plage de longueurs d'onde.

7. Agencement pour la détection de la structure tridimensionnelle d'un objet (1), comprenant un appareil de transport pour le transport d'un objet (1), un capteur (12) sous la forme d'un capteur de surface comprenant un certain nombre de capteurs individuels (121) agencés en lignes et en colonnes pour la détection de l'objet (1) au cours de son déplacement au moyen de l'appareil de transport,
dans lequel les capteurs individuels (121) sont conçus de manière à émettre des signaux d'événement pixel par pixel, à savoir
- des signaux d'événement indiquant un éclaircissement lorsque la valeur d'intensité de la lumière arrivant au pixel concerné dépasse une valeur seuil supérieure prédéfinie, et
- des signaux d'événement indiquant un assombrissement lorsque la valeur d'intensité de la lumière arrivant au pixel respectif est inférieure à une valeur seuil inférieure prédéfinie,
- dans lequel, dans le cas où la valeur d'intensité est dépassée ou n'est pas atteinte et de l'émission consécutive d'un signal d'événement, les valeurs de seuil supérieure et inférieure du capteur individuel respectif (12) sont adaptées de sorte que la valeur d'intensité actuelle se trouve au sein des valeurs seuils supérieure et inférieure adaptées,
- dans lequel l'agencement comprend une source de lumière, en particulier un laser (13), qui irradie au moins une partie de l'objet (1), qui se trouve dans la zone de réception du capteur (12), avec un motif structuré d'ondes électromagnétiques, en particulier un motif lumineux, de préférence par un motif structuré sous la forme d'une ligne laser,
- dans lequel une unité de traitement est montée en aval du capteur, laquelle est conçue pour rechercher, dans les signaux d'événement (E) établis par le capteur (12), des paires (Eₒ, Eₓ) comprenant au moins un premier signal d'événement indiquant un éclaircissement et au moins un second signal d'événement, en particulier suivant dans le temps, indiquant un assombrissement, dans lequel les signaux d'événement appartenant à la paire
- ont été créés dans une fenêtre de temps prédéfinie par la vitesse de transport, et
- se trouvent sur la même courbe d'image, sur laquelle sont représentées des zones de surface d'objets qui sont déplacés parallèlement à la direction de transport (T), et
- qui présentent notamment une distance ou une position relative l'une par rapport à l'autre qui se situe dans une plage de tolérance prédéfinie,
- dans lequel l'unité de traitement est conçue pour
- à partir des valeurs de coordonnées du premier et/ou du second signal d'événement (Eₒ, Eₓ) des paires ainsi trouvées, déterminer une information de position comprenant une valeur de profondeur, facultativement la position tridimensionnelle de la partie de la surface de l'objet éclairée par le motif lumineux, et
- décaler les différentes informations de position déterminées en fonction de l'instant d'enregistrement, de la vitesse de transport et de l'heure d'apparition de la paire dans la direction de transport, et créer une structure tridimensionnelle représentant l'objet sur la base de ces informations de position.

8. Agencement selon la revendication 7, **caractérisé en ce que** l'unité de traitement est conçue pour effectuer une transformation (H) qui rectifie les différents signaux d'événement produits par le capteur (12) ou les capteurs individuels (121) en ce qui concerne leur position d'image, de sorte que la transformation attribue à chaque signal d'événement deux coordonnées rectifiées (x_{R}, y_{R}) au cours de la transformation (H), dans lequel
- une première direction de coordonnées (XR) du signal d'événement de la position de l'objet enregistré correspond à sa position dans la direction de transport (T), et/ou
- **en ce que** la seconde direction de coordonnées (y_{R}) du signal d'événement forme un angle avec la direction de transport (T), de préférence perpendiculaire à la direction de transport (T) et/ou perpendiculaire à un plan par rapport auquel une information de profondeur doit être déterminée, et/ou
- **en ce que** des signaux d'événement, qui se trouvent sur la même courbe d'image (c_{T}), sont reproduits sur les zones de surface d'objets qui sont déplacés parallèlement à la direction de transport, se voient attribuer la même seconde direction de coordonnées (y_{R}).

9. Agencement selon la revendication 8, **caractérisé en ce que** la rectification consiste en une transformation de coordonnées linéaire qui transforme les positions d'image (x, y) des signaux d'événement dans les directions de coordonnées (x_{R}, y_{R}) des coordonnées rectifiées, dans lequel la conversion est définie de préférence par une transformation de coordonnées homogène en utilisant une matrice 3x3.

10. Agencement selon l'une quelconque des revendications 7 à 9, **caractérisé en ce que** l'unité de traitement est conçue pour effectuer, en particulier avant ou après la rectification, une transformation qui compense la distorsion causée par la lentille du capteur (12).

11. Dispositif selon l'une quelconque des revendications 7 à 10, **caractérisé en ce que** l'unité de traitement est conçue pour, dans le cas où, au sein d'une plage de temps prédéfinie
- à l'intérieur d'une courbe d'image, sur les zones de surface d'objets qui sont déplacés parallèlement à la direction de transport, aucune paire de signaux d'événements pouvant être attribués les uns aux autres n'est détectée ou
- après la réalisation d'une rectification, aucune paire de signaux d'événement pouvant être affectés l'un à l'autre n'est détectée avec une seconde direction de coordonnées (yR) à l'intérieur d'une zone prédéfinie, dans des intervalles de temps prédéfinis pour créer respectivement une information de position basée sur les dernières paires respectivement déterminées.

12. Agencement selon l'une quelconque des revendications 7 à 11, **caractérisé en ce que**
- un filtre optique est agencé devant le capteur (12), lequel est transparent, de préférence exclusivement, pour la lumière dont la plage de longueurs d'onde correspond à la plage de longueurs d'onde du modèle d'onde électromagnétique, et/ou
- **en ce que** le capteur (12) est sensible, en particulier exclusivement, à des ondes électromagnétiques de ces plages de longueurs d'onde.
